Europäisches Patentamt

European Patent Office

Office européen des brevets

(11) Numéro de publication: **0 376 766**

**A1**

(12) # DEMANDE DE BREVET EUROPEEN

(21) Numéro de dépôt: **89403174.9**

(22) Date de dépôt: **17.11.89**

(51) Int. Cl.5: **C08G 77/60, C08L 83/16, C08J 3/24**

(30) Priorité: **25.11.88 FR 8815394**

(43) Date de publication de la demande:
**04.07.90 Bulletin 90/27**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Duboudin, Françoise**
**21, Avenue de Maréchal Juin**
**F-33600 Talence(FR)**
Inventeur: **Babot, Odile**
**Les Bosquets de Chambéry 86, Chemin de Pauge**
**F-33140 Villenave d'Ornon(FR)**
Inventeur: **Pillot, Jean-Paul**
**6, Allée de la Sanguine**
**F-33610 Cestas(FR)**
Inventeur: **Dunogues, Jacques**
**22, Avenue du Président Poincaré**
**F-33400 Talence(FR)**
Inventeur: **Bouillon, Eric**
**Paluel**
**F-76450 Cany Barville(FR)**
Inventeur: **Pailler, René**
**29, Allée de la Lande**
**F-33610 Cestas(FR)**

(74) Mandataire: **Cazes, Jean-Marie et al**
**RHONE-POULENC CHIMIE Service Brevets**
**Chimie 25, Quai Paul Doumer**
**F-92408 Courbevoie Cédex(FR)**

(54) **Procédé de traitement de polycarbosilanes, produits ainsi obtenus et utilisation dudit traitement dans la fabrication de produits céramiques en carbure de silicium notamment sous forme de fibres.**

(57) L'invention a trait à un procédé de traitement d'un polycarbosilane dans le but notamment de le rendre infusible, et qui est caractérisé par le fait qu'il consiste à mettre en contact avec du soufre à l'état vapeur au moins un polycarbosilane présentant au moins deux, et de préférence au moins trois, groupes $\equiv$ SiH par molécule.

Le polycarbosilane ainsi traité est infusible et insoluble dans les solvants organiques, et peut être utilisé par pyrolyse à la préparation d'articles céramiques en carbure de silicium, notamment des fibres.

## PROCEDE DE TRAITEMENT DE POLYCARBOSILANES, PRODUITS AINSI OBTENUS ET UTILISATION DUDIT TRAITEMENT DANS LA FABRICATION DE PRODUITS CERAMIQUES EN CARBURE DE SILICIUM NOTAMMENT SOUS FORME DE FIBRES

De manière générale, l'invention a trait à un procédé de traitement de polycarbosilanes, et aux produits ainsi obtenus.

De manière plus particulière, elle concerne également, à titre d'application, l'utilisation dudit traitement dans la préparation, par la voie polymère, de produits céramiques à base de carbure de silicium, notamment sous forme de fibres.

L'idée de préparer des produits céramiques, chargés ou non, à base de carbure de silicium par dégradation thermique de composés polymériques organosiliciés n'est pas nouvelle et, à ce jour, de nombreux articles et brevets ont été publiés sur le sujet.

L'intérêt de la voie polymère réside surtout dans les possibilités de mise en forme de ce type de produit, et plus particulièrement pour l'obtention, après pyrolyse, de fibres en carbure de silicium.

Selon un schéma désormais classique, des précurseurs polymériques du type polycarbosilane (après fusion éventuelle s'ils sont initialement à l'état solide) sont filés par extrusion sous la forme de fibres continues, ces fibres sont ensuite traitées dans le but notamment d'améliorer leur tenue thermique et/ou mécanique, puis pyrolysées pour donner finalement des fibres céramiques à base de carbure de silicium.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres SiC.

A ce jour, le durcissement des fibres en polycarbosilane fait appel soit à des méthodes physiques (bombardement électronique, rayonnement ultra-violet, etc...) soit à des méthodes chimiques.

Les méthodes physiques précitées présentent l'inconvénient majeur d'être de mise en oeuvre et onéreuse ; aussi la seule voie retenue actuellement industriellement est-elle le durcissement chimique au moyen d'un traitement à l'oxygène.

Cependant, l'introduction d'oxygène dans une fibre en carbure de silicium présente l'inconvénient sérieux d'abaisser fortement ses propriétés mécaniques à des températures d'utilisation supérieures à 1000° C.

La présente invention a donc pour but de proposer un moyen de traitement chimique simple, efficace, économique et de mise en oeuvre aisée qui, en obviant aux inconvénients des procédés de l'art antérieur, permette d'obtenir sous des formes les plus diverses (fils, fibres, articles moulés, revêtements, pellicules, etc...) des polycarbosilanes à tenue thermique et/ou mécanique améliorée.

Elle vise également à fournir un procédé particulièrement efficace de préparation de fibres céramiques en carbure de silicium à bonnes propriétés mécaniques et faisant appel audit traitement.

Ces buts, et d'autres, peuvent être atteints au moyen de la présente invention qui concerne en effet notamment un procédé de traitement d'un polycarbosilane, caractérisé par le fait qu'il consiste à mettre en contact avec du soufre à l'état vapeur au moins un polycarbosilane présentant au moins deux groupes $\equiv$ SiH par molécule.

Elle concerne également un procédé de préparation de fibres céramiques à base de carbure de silicium, du type comprenant le traitement chimique puis la pyrolyse, de préférence sous une atmosphère inerte ou sous vide, d'une fibre en polycarbosilane, et qui est caractérisé par le fait que ledit traitement chimique est un traitement conforme à l'invention tel que décrit ci-dessus.

Mais d'autres caractéristiques, aspects et avantages de l'invention apparaitront encore plus complètement à la lecture de la description qui va suivre et des exemples concrets, mais non limitatifs, relatifs à sa mise en oeuvre.

Les polycarbosilanes précurseurs de SiC destinés à être traités selon l'invention sont des composés bien connus de l'état de la technique qui peuvent être préparés suivant une large variété de procédés à partir d'une gamme étendue de produits de départ.

On rappelle ici simplement que les polycarbosilanes sont des composés organosiliciés ayant comme constituants principaux du squelette des atomes de carbone et des atomes de silicium, et pouvant présenter des structures de type linéaire, cyclique ou mixte, c'est à dire des structures dans lesquelles des motifs de carbosilanes linéaires et des motifs de carbosilanes cycliques sont liés chimiquement.

Selon l'invention, ces polycarbosilanes doivent contenir au moins deux, et de préférence au moins 3 groupes $\equiv$ SiH par molécule.

La synthèse de tels produits peut être réalisée en suivant l'enseignement de base décrit notamment dans les demandes de brevet FR-A-2.308.590, FR-A-2.308.650, FR-A-2.327.836, FR-A-2.345.477, FR-A-2.487.364 et EP-A-51.855, toutes citées ici à titre de références non limitatives.

Bien entendu, préalablement au traitement de durcissement selon l'invention développé plus en détails ci-après, les polycarbosilanes peuvent avoir subi des opérations de mise en forme permettant d'aboutir aux configurations les plus diverses, telles que filaments, fibres, articles moulés, revêtements de support, et autres. Le traitement selon l'invention est ainsi avantageusement applicable au durcissement des fibres de polycarbosilane qui, une fois traitées, sont destinées par pyrolyse à engendrer des fibres céramiques à base de carbure de silicium.

Conformément à l'invention, et après donc mise en forme éventuelle, les polycarbosilanes définis ci-dessus sont alors traités au moyen de vapeurs de soufre.

Ces vapeurs de soufre peuvent être utilisées pures, ou bien encore diluées dans un gaz inerte, tel qu'un gaz d'argon (ou tout autre gaz rare) ou d'azote par exemple.

La mise en contact polycarbosilane/vapeurs peut être statique ou dynamique, c'est à dire réalisée sous balayage.

Ces vapeurs peuvent avoir été générées par tout moyen connu en soi, notamment par évaporation de soufre, ou bien encore par décomposition de tout autre composé susceptible d'engendrer du soufre dans les conditions pratiques du traitement selon l'invention.

La température à laquelle est menée le traitement peut varier dans une large mesure et dépend de la nature du polycarbosilane à durcir.

D'une manière pratique, cette température est généralement comprise entre 150°C et la température de ramollissement du polymère ; il est même possible d'opérer à des températures supérieures à ce point de ramollissement, compte tenu du caractère quasiment instantané du procéssus de durcissement du polycarbosilane en présence de vapeurs soufrées. Néanmoins, et de préférence, la température du traitement est comprise entre 200°C et une température légèrement inférieure à celle correspondant au point de ramollissement du polycarbosilane à durcir.

La durée du traitement selon l'invention n'est pas critique, et peut varier de quelques secondes à plusieurs jours, et de préférence de quelques minutes à quelques heures.

D'une manière générale, cette durée est liée à la température du traitement : plus cette température est élevée et plus la durée du traitement peut être raccourcie.

A l'issue du traitement selon l'invention, on récupère un polycarbosilane parfaitement infusible et insoluble dans la plupart des solvants organiques, notamment dans l'hexane.

Selon la quantité de soufre mise en jeu, la durée et la température du traitement, ainsi que la nature du polycarbosilane de départ, le produit traité peut contenir des quantités de soufre généralement comprises entre 3 et 30 % en poids par rapport à la masse totale du produit, et de préférence entre 10 et 20 % en poids.

Sans vouloir limiter l'invention à une quelconque théorie, la disparition progressive des bandes ≡ SiH observables par analyse infra-rouge sur le polymère en cours de traitement, semble indiquer que le durcissement selon l'invention pourrait s'opérer par la création de liaisons du type ≡ Si - SH donnant des pontages du type ≡ Si - S - Si ≡ au sein dudit polymère.

Le soufre ainsi incorporé peut être éliminé progressivement au cours des traitements thermiques ultérieurs (pyrolyses) destinés à transformer le polycarbosilane durci en une céramique à base de carbure de silicium.

De manière classique et connue, cette pyrolyse est généralement conduite sous vide ou dans une atmosphère inerte vis à vis du carbure de silicium, à une température comprise entre 850 et 1500°C environ, jusqu'à ce que le polycarbosilane préalablement traité soit entièrement transformé en une céramique à base de carbure de silicium.

Comme déjà indiqué, le traitement selon l'invention s'intègre alors particulièrement bien dans les procédés généraux classiques de fabrication de fibres céramiques à base de carbure de silicium à partir de précurseurs du type polycarbosilane.

Des exemples vont maintenant être donnés pour illustrer les divers aspects de l'invention dans le cadre particulier de la préparation de fibres à base de carbure de silicium.

## Préparation des fibres en polycarbosilane

Le polycarbosilane utilisé a été synthétisé par chauffage d'un polydiméthylsilane à 470°C dans un autoclave, selon le mode opératoire décrit par S. YAJIMA et al (J. Mater. Sci., 1978 (13), 2569, et demande de brevet français FR-A-2.308.650).

L'élimination sélective des fortes masses moléculaires contenues dans les échantillons de polycarbosi-

3

lanes ainsi préparés (étape facultative mais préférable pour le filage sous forme de fibres) peut être réalisée notamment par dissolution sélective des polymères de masses moyennes dans de l'acétate d'éthyle (température comprise entre 30 et 50°C) puis récupération du polycarbosilane ainsi dissout.

Des polycarbosilanes commerciaux, tels que ceux vendus par la société NIPPON CARBON peuvent aussi, par commodité, être employés comme matière première.

Les polycarbosilanes ainsi obtenus sont alors extrudés puis filés sous forme de fibres présentant un diamètre moyen de 15 μm.

## EXEMPLE 1

L'appareillage est constitué par un réacteur (en Pyrex par exemple) équipé d'une entrée de gaz inerte (argon par exemple) et d'une sortie munie d'un réfrigérant.

On place dans ce réacteur 6,4 g de fibres telles que celles préparées précédemment et 4,2 g de soufre solide.

Le réacteur est alors chauffé au moyen d'un bain de sable à 350°C pendant 3h 45mn.

Les fibres obtenues à l'issue du traitement sont de couleur jaune, sont infusibles et insolubles, notamment dans l'hexane.

La fibre contient alors de 15 à 20 % de soufre. L'analyse par infra-rouge indique la disparition totale de la bande √(si-H) observable dans le polycarbosilane initial.

Après pyrolyse sous argon purifié et à 1200°C (vitesse de montée en température : 5°C/mn, palier d'une heure à cette température), le taux de soufre est alors de 5 %.

Après pyrolyse à 1400°C et maintien d'une heure à cette température, il ne reste plus que 0,7 % de soufre ; une pyrolyse encore plus prolongée éliminerait complètement ce dernier. On obtient alors une fibre céramique à base de carbure de silicium.

## EXEMPLE 2

L'appareillage de durcissement au soufre est constitué cette fois par une enceinte tubulaire chauffée par un four résistif dans laquelle passe un faible courant d'argon purifié (ou indifféremment d'azote purifié). Une nacelle contenant du soufre solide, positionnée dans une partie amont de l'enceinte où la température est supérieure à 140°C, va libérer du soufre sous forme vapeur. Le soufre libéré va être transporté par le gaz vecteur jusqu'aux fibres de polycarbosilane qui ont été préalablement disposées dans une seconde nacelle positionnée dans une partie avale de l'enceinte ou la température régnants est $\theta_1$.

La vitesse de montée en température jusqu'à $\theta_1$ a été réglée comme suit :
- ambiante → 140°C : 60°C/h
- 140°C → $\theta_1$ : 5°C/h

Le tableau I ci-dessous résume les divers essais de durcissement (essais A1 à A5) pour des $\theta_1$ différents.

4

TABLEAU I

| ESSAI | TEMPERATURE DE DURCISSEMENT $\theta_1$ | TEMPS DE MAINTIEN A $\theta_1$ | POURCENTAGE MASSIQUE DE SOUFRE SUR FIBRE TRAITEE | ASPECT | REMARQUES |
|---|---|---|---|---|---|
| A1 (compa-ratif) | - | - | 0 | blanches | sans traitement F |
| A2 | 180°C | 4 H | 3,5 | jaune paille | I / F |
| A3 | 200°C | 4 H | 4,5 | | I |
| A4 | 220°C | 4 H | 6 | | I |
| A5 | 240°C | 4 H | 7 | brun clair | I |

Rem. : F signifie fusible
I signifie infusible

Les fibres obtenues après traitement selon l'essai A4 sont ensuite pyrolysées dans une ampoule de silice scéllée sous vide jusqu'à 850°C, puis portées ou non à plus haute température dans un four maintenu sous atmosphère d'argon purifié.

Le tableau II ci-dessous résume ces essais de pyrolyse (essais B1 et B2) et montre l'élimination du soufre lors du traitement haute température. Les fibres obtenues sont des fibres céramiques à base de carbure de silicium.

TABLEAU II

| ESSAI | TEMPERATURE DE PYROLYSE | POURCENTAGE MASSIQUE DE SOUFRE DANS LA FIBRE PYROLYSEE | ASPECT |
|---|---|---|---|
| B1 | 850°C | 9 | brun foncé |
| B2 | 1400°C | 0 | noir |
| Remarque : | | | |
| Le pourcentage massique de soufre apparement plus élevé dans l'essai B1 que dans le proudit de départ (essai A4) s'explique par le fait que, lors de la pyrolyse, d'autres éléments peuvent s'éliminer plus vite que le soufre. | | | |

**Revendications**

1/ Procédé de traitement d'un polycarbosilane, caractérisé par le fait qu'il consiste à mettre en contact avec du soufre à l'état vapeur au moins un polycarbosilane présentant au moins deux groupes ≡ SiH par molécule.

2/ Procédé selon la revendication 1 caractérisé en ce que ledit polycarbosilane présente au moins trois groupes ≡ SiH par molécule.

3/ Procédé selon l'une quelconque des revendications 1 et 2 caractérisé en ce que la température de traitement est comprise entre 150°C et la température correspondant au point de ramollissement du polycarbosilane.

4/ Procédé selon la revendication 3 caractérisé en ce que ladite température est comprise entre 200°C et une température légèrement inférieure à celle correspondant au point de ramollissement du polycarbosilane.

5/ Procédé selon l'une quelconque des revendications 1 à 4 caractérisé en ce que ledit soufre à l'état vapeur est dilué dans un gaz inerte, tel que d'argon ou d'azote.

6/ Procédé selon l'une quelconque des revendications 1 à 5 caractérisé en ce que ladite mise en contact est de type statique ou dynamique.

7/ Procédé selon l'une quelconque des revendications précédentes caractérisé en ce que, préalablement audit traitement, on met ledit polycarbosilane à une forme d'article désirée.

8/ Procédé selon la revendication 7 caractérisé en ce que ladite forme est une fibre.

9/ Procédé selon l'une quelconque des revendications 1 à 8 caractérisé en ce qu'il comprend en outre une étape de pyrolyse destinée à transformer le polycarbosilane traité en un produit céramique à base de carbure de silicium.

10/ Procédé selon la revendication 9 caractérisé en ce que ladite pyrolyse est réalisée sous vide ou sous atmosphère inerte, telle que d'argon ou d'azote.

11/ Procédé selon la revendication 10 caractérisé en ce que la température de ladite pyrolyse est comprise entre 850°C et 1500°C.

12/ Polycarbosilane, du type infusible et insoluble dans la plupart des solvants organiques et notamment dans l'hexane, caractérisé en ce qu'il contient de 3 à 30% en poids de soufre.

13/ Polycarbosilane selon la revendication 12 caractérisé en ce que ladite teneur en soufre est comprise entre 10 et 20 % en poids.

14/ Polycarbosilane selon l'une quelconque des revendications 12 à 13 caractérisé en ce qu'il est substantiellement exempt de liaisons du type ≡SiH.

Office européen
des brevets

RAPPORT DE RECHERCHE EUROPEENNE

Numero de la demande

EP 89 40 3174

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 190 764 (BAYER) <br> * Revendictions 1,4; page 6, lignes 5-25 * <br> --- | 1 | C 08 G 77/60 <br> C 08 L 83/16 <br> C 08 J 3/24 |
| A | EP-A-0 298 630 (DOW CORNING) <br> * Revendications 1,2 * <br> --- | 1 | |
| A | EP-A-0 167 230 (NIPPON CARBON) <br> * Revendication 1 * <br> ----- | 1 | |

DOMAINES TECHNIQUES RECHERCHES (Int. Cl.5)

C 08 G
C 08 L
C 04 B

**Le présent rapport a été établi pour toutes les revendications**

| Lieu de la recherche | Date d'achèvement de la recherche | Examinateur |
|---|---|---|
| LA HAYE | 17-04-1990 | DEPIJPER R.D.C. |